# EUROPEAN PATENT APPLICATION

(11) **EP 4 827 170 A1**
(43) Date of publication of application: **21.10.2026**
(21) Application number: 24923567.2
(22) Date of filing: 24.12.2024
(51) Int. Cl.: H04W 36/00

(54) **METHOD FOR TRANSMITTING CONFIGURATION INFORMATION AND RELATED DEVICE**

(30) Priority: 08.02.2024 CN 202410178278
(71) Applicant: Honor Device Co., Ltd., Shenzhen, Guangdong 518040 (CN)
(72) Inventor: SHAN, Baokun, Shenzhen, Guangdong 518040 (CN)
(74) Representative: Goddar, Heinz J.
(86) International application number: PCT/CN2024/141787
(87) International publication number: WO 2025/167365

(57) **Abstract**

This application provides a configuration information transfer method and a related device. The method includes: A first access network device obtains configuration information, where the configuration information includes first service support information and second service support information of each of a plurality of cells of the first access network device. The first service support information indicates whether the cell uses a connected-mode cell DRX/DTX mode, and the second service support information indicates whether a multicast/broadcast service supported by the cell uses a cell DRX/DTX mode. The first access network device sends the configuration information to a second access network device.

## Description

This application claims priority to Chinese Patent Application No. 202410178278.1, filed with the China National Intellectual Property Administration on February 8, 2024 and entitled "CONFIGURATION INFORMATION TRANSFER METHOD AND RELATED DEVICE", which is incorporated herein by reference in its entirety.

### TECHNICAL FIELD

This application relates to the communication field, and in particular, to a configuration information transfer method and a related device.

### BACKGROUND

Currently, in discussion of cellular communication technologies, more attention has been paid to power consumption of terminals (due to a limited battery size and sensitivity to user experience). However, in recent years, with development of green communication concepts and consideration of operators for benefits, network energy saving also starts to be discussed. Rel-18/19 has initiated a work item on network energy saving, focusing on network energy saving.

In a current mechanism design, only for a connected-mode terminal, a cell discontinuous transmission (discontinuous receiving, DTX) pattern and/or a cell discontinuous reception (discontinuous transmitting, DRX) pattern may be configured for the terminal, where a configuration is similar to that of a DRX mechanism of a UE, that is, the terminal is periodically active. Specifically, cell DTX means that a base station enables a sending function only in an active period, in other words, if the terminal is not active, the terminal does not need to receive downlink dynamic scheduling, semi-static downlink data transmission, and the like; and cell DRX means that the base station enables a receiving function only in the active period, in other words, if the terminal is not active, the terminal cannot send an uplink SR, various channel feedback reports, semi-static uplink data, and the like. As long as DRX is configured for the UE, power saving effects can be achieved. However, for the cell DTX/DRX solution, although the configuration is for the UE, because a cell or a base station serves a plurality of terminals, a large quantity of UEs need to be configured with similar DRX/DTX patterns to achieve energy saving effects for a network. In a concept, the base station may indicate the terminal to reselect or hand over to a cell that supports a multicast/broadcast service using the cell DRX/DTX mode.

However, in this concept, the base station needs to obtain a support status of each cell of the base station and a neighboring base station for the cell DRX/DTX mode, to indicate, in a targeted manner, the terminal to perform reselection or handover. However, currently, the base station can only obtain a support status of each cell of the base station for the cell DRX/DTX mode.

### SUMMARY

This application provides a configuration information transfer method and a related device, to transfer configuration information between base stations, so that the base station can indicate, in a targeted manner, a terminal to perform reselection or handover.

According to a first aspect of this application, a configuration information transfer method is provided.

A first access network device obtains configuration information, where the configuration information includes first service support information and second service support information of each of a plurality of cells of the first access network device. The first service support information indicates whether the cell uses a connected-mode cell DRX/DTX mode, and the second service support information indicates whether a multicast/broadcast service supported by the cell uses a cell DRX/DTX mode. The first access network device sends the configuration information to a second access network device.

In this application, whether each cell of the access network device uses the connected-mode cell DRX/DTX mode and whether the multicast/broadcast service supported by the cell uses the cell DRX/DTX mode can be transferred between access network devices, so that the access network device can indicate, in a targeted manner, a terminal to perform reselection or handover, thereby facilitating energy saving.

In a possible implementation, the configuration information is used by the second access network device to indicate a terminal to perform cell reselection.

In a possible implementation, the configuration information is used by the second access network device to indicate a terminal to perform cell handover.

In a possible implementation, in the configuration information, the multicast/broadcast service is identified by using a TMGI or a G-RNTI.

In a possible implementation, the first access network device and the second access network device are neighboring access network devices.

According to a second aspect of this application, a configuration information transfer method is provided.

A second access network device receives configuration information from a first access network device, where the configuration information includes first service support information and second service support information of each of a plurality of cells of the first access network device. The first service support information indicates whether the cell uses a connected-mode cell DRX/DTX mode, and the second service support information indicates whether a multicast/broadcast service supported by the cell uses a cell DRX/DTX mode.

In a possible implementation, the second access network device further indicates, based on the configuration information, a terminal to perform cell reselection.

In a possible implementation, the second access network device further indicates, based on the configuration information, a terminal to perform cell handover.

In a possible implementation, in the configuration information, the multicast/broadcast service is identified by using a TMGI or a G-RNTI.

In a possible implementation, the first access network device and the second access network device are neighboring access network devices.

According to a third aspect of this application, a first access network device is provided, and includes an obtaining unit and a sending unit.

The obtaining unit is configured to obtain configuration information, where the configuration information includes first service support information and second service support information of each of a plurality of cells of the first access network device. The first service support information indicates whether the cell uses a connected-mode cell DRX/DTX mode, and the second service support information indicates whether a multicast/broadcast service supported by the cell uses a cell DRX/DTX mode.

The sending unit is configured to send the configuration information to a second access network device.

In a possible implementation, the configuration information is used by the second access network device to indicate a terminal to perform cell reselection.

In a possible implementation, the configuration information is used by the second access network device to indicate a terminal to perform cell handover.

In a possible implementation, in the configuration information, the multicast/broadcast service is identified by using a TMGI or a G-RNTI.

In a possible implementation, the first access network device and the second access network device are neighboring access network devices.

According to a fourth aspect of this application, a second access network device is provided, and includes a receiving unit.

The receiving unit is configured to receive configuration information from a first access network device, where the configuration information includes first service support information and second service support information of each of a plurality of cells of the first access network device.

The first service support information indicates whether the cell uses a connected-mode cell DRX/DTX mode, and the second service support information indicates whether a multicast/broadcast service supported by the cell uses a cell DRX/DTX mode.

In a possible implementation, the second access network device further includes a processing unit.

The processing unit is configured to indicate, based on the configuration information, a terminal to perform cell reselection.

In a possible implementation, the processing unit is configured to indicate, based on the configuration information, a terminal to perform cell handover.

In a possible implementation, in the configuration information, the multicast/broadcast service is identified by using a TMGI or a G-RNTI.

In a possible implementation, the first access network device and the second access network device are neighboring access network devices.

According to a fifth aspect of this application, a first access network device is provided, and includes a processor and a memory. The processor is coupled to the memory, the memory is configured to store instructions, and when the instructions are executed by the processor, the first access network device is enabled to perform the method according to the first aspect.

According to a sixth aspect of this application, a second access network device is provided, and includes a processor and a memory. The processor is coupled to the memory, the memory is configured to store instructions, and when the instructions are executed by the processor, the second access network device is enabled to perform the method according to the second aspect.

According to a seventh aspect of this application, a computer-readable storage medium is provided.

The computer-readable storage medium stores instructions. When a computer executes the instructions, the computer is enabled to perform the method according to the foregoing aspects.

### BRIEF DESCRIPTION OF DRAWINGS

FIG. 1 is a schematic diagram of an application scenario according to this application;
FIG. 2 is a schematic flowchart of a configuration information transfer method according to this application;
FIG. 3 is a schematic diagram of configuration information;
FIG. 4 is a schematic diagram of configuration information;
FIG. 5 is a schematic diagram of configuration information;
FIG. 6 is a schematic diagram of configuration information;
FIG. 7 is a schematic diagram of configuration information;
FIG. 8 is a schematic diagram of a structure of a first access network device;
FIG. 9 is a schematic diagram of a structure of a second access network device; and
FIG. 10 is a schematic diagram of a structure of a first access network device or a second access network device.

### DESCRIPTION OF EMBODIMENTS

The following describes embodiments of this application with reference to accompanying drawings. It is clear that the described embodiments are merely some rather than all of embodiments of this application. A person of ordinary skill in the art may know that, with development of technologies and emergence of new scenarios, technical solutions provided in embodiments of this application are also applicable to similar technical problems.

In the specification, claims, and accompanying drawings of this application, the terms "first", "second", and the like are intended to distinguish between similar objects but do not necessarily indicate a specific order or sequence. It should be understood that data termed in such a way may be interchangeable in proper circumstances, so that embodiments described herein can be implemented in an order other than the order illustrated or described herein. In addition, terms "include" and "have" and any other variants thereof are intended to cover the non-exclusive inclusion. For example, a process, method, system, product, or device that includes a series of steps or units is not necessarily limited to those expressly listed steps or units, but may include other steps or units not expressly listed or inherent to the process, method, product, or device.

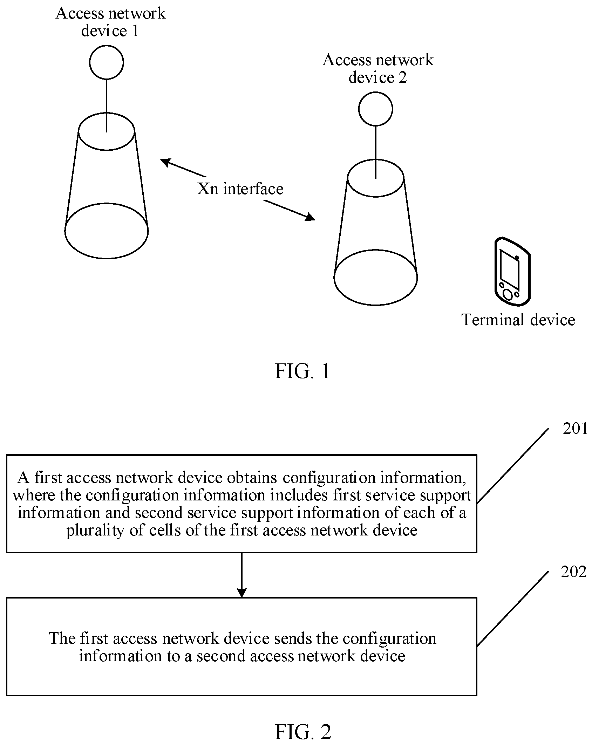

A configuration information transfer method in this application may be applied to a long term evolution (long term evolution, LTE) system, a 5th generation mobile network (5th generation mobile networks, 5G) new radio (new radio, NR) system, a 6th generation mobile communication technology (the 6th generation mobile communication technology, 6G) system, and subsequent evolved systems. This is not limited in this application. As shown in FIG. 1, a communication system includes at least two access network devices, and may also include a terminal device. The terminal device may include a handheld device having a wireless connection function or a processing device connected to a wireless modem. The terminal device may communicate with a core network (for example, a 5G core (5th generation core, 5GC)) via a radio access network (radio access network, RAN), and may exchange voice and/or data with the RAN. The terminal device may also be referred to as a terminal (Terminal), a user equipment (user equipment, UE), a wireless terminal device, a mobile terminal (mobile terminal, MT) device, a subscriber unit (subscriber unit), a subscriber station (subscriber station), a mobile station (mobile station, MS), a mobile (mobile) console, a remote station (remote station), an access point (access point, AP), a remote terminal device (remote terminal), an access terminal device (access terminal), a user terminal device (user terminal), a user agent (user agent), a user device (user device), or the like. In addition, the terminal device may be a mobile phone (mobile phone), a tablet computer (Pad), a computer having a wireless transceiver function, a virtual reality (virtual reality, VR) device, an augmented reality (augmented reality, AR) device, an extended reality (extended reality, XR) service terminal, a cloud gaming (cloud gaming, CG) service terminal, a wireless terminal in industrial control (industrial control), a wireless terminal in self-driving (self-driving), a wireless terminal in remote medical surgery (remote medical surgery), a wireless terminal in a smart grid (smart grid), a wireless terminal in transportation safety (transportation safety), a wireless terminal in a smart city (smart city), a wireless terminal in a smart home (smart home), or the like. It should be understood that embodiments of this application impose no limitation on a specific technology and a specific device form that are used by the terminal device.

The access network device may be any device that has a wireless transceiver function, and may be configured to be responsible for functions related to an air interface, for example, a radio link maintenance function, a radio resource management function, and some mobility management functions. In addition, the access network device may be further configured with a baseband unit (baseband unit, BBU), which has a baseband signal processing function. For example, the access network device may be a radio access network (radio access network, RAN) device that currently provides a service for the terminal device. Currently, some common examples of the access network device are: a NodeB (NodeB, NB), an evolved NodeB (evolved NodeB, eNB), a next generation NodeB (next generation NodeB, gNB) in a 5G new radio (new radio, NR) system, a node (for example, an xNodeB) in a 6G system, a transmission reception point (transmission reception point, TRP), a radio network controller (radio network controller, RNC), a base station controller (base station controller, BSC), a base transceiver station (base transceiver station, BTS), and a home base station (for example, a home evolved node (home evolved NodeB) or a home node (home NodeB, HNB)). In addition, in a network structure such as a cloud access network (cloud radio access network, CloudRAN) or an open access network (open radio access network, ORAN), the access network device may be a device including a central unit (centralized unit, CU) (also referred to as a control unit) and/or a distributed unit (distributed unit, DU). For a RAN device including a CU and a DU, protocol layers of a gNB in an NR system are split, functions of some protocol layers are centrally controlled by the CU, functions of some or all remaining protocol layers are distributed in the DU, and the CU centrally controls the DU. A network interface between two access network devices is referred to as an Xn interface. The Xn interface supports exchange of respective base station global information, serving cell information, and neighboring cell information between the two access network devices, and is used to implement functions such as load balancing, cell energy saving, and energy-saving cell activation.

Refer to FIG. 2. The following describes in detail a procedure of the configuration information transfer method in this application. A first access network device in this application is, for example, an access network device 1 shown in FIG. 1, and a second access network device is, for example, an access network device 2 shown in FIG. 1.

201: The first access network device obtains configuration information, where the configuration information includes first service support information and second service support information of each of a plurality of cells of the first access network device.

The first access network device obtains the configuration information of the first access network device. The configuration information includes the first service support information and the second service support information of each of the plurality of cells of the first access network device. The first service support information indicates whether the cell uses a connected-mode cell DRX/DTX mode. The connected-mode cell DRX/DTX mode means that for a terminal that performs a unicast service in a connected mode, a network may configure a cell discontinuous transmission and/or discontinuous reception mechanism for the terminal. Each mechanism corresponds to information such as a discontinuous transmission/reception cycle and active period. Based on the related configuration information, the terminal may determine a time period (an active period) in which the network receives and sends signaling and data in one cycle. For the connected-mode cell DRX mechanism, a network base station enables a receiving function only in an active period. In other words, in an inactive period, the terminal cannot send an uplink SR, various channel feedback reports, semi-static uplink data, and the like. For the cell DTX mechanism, the base station enables a sending function only in an active period. In other words, in an inactive period, the terminal is not required to receive dynamic downlink scheduling, semi-static downlink data transmission, and the like. The second service support information indicates whether a multicast/broadcast service supported by the cell uses a cell DRX/DTX mode.

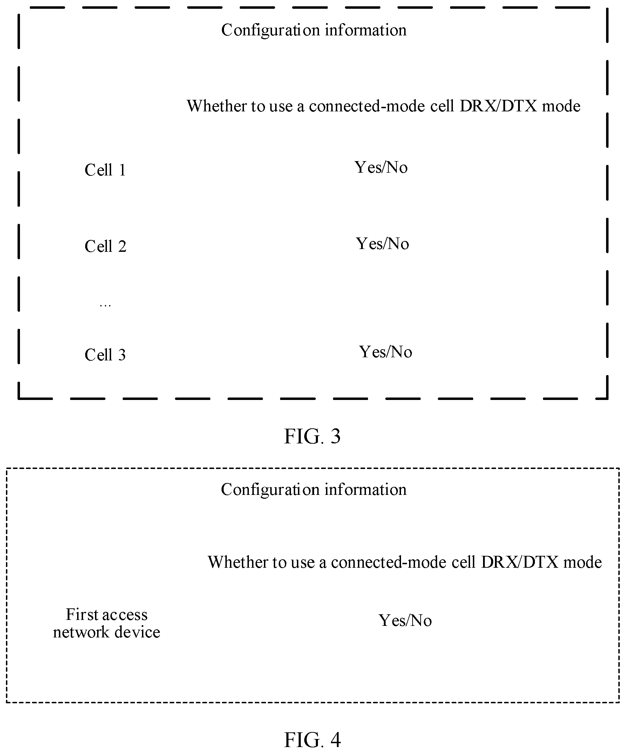

Refer to FIG. 3. In the configuration information, for each cell, whether the cell uses the connected-mode cell DRX/DTX mode may be separately indicated. Refer to FIG. 4. Alternatively, if all cells of the first access network device use the connected-mode cell DRX/DTX mode, correspondingly, in the configuration information, that the first access network device uses the connected-mode cell DRX/DTX mode may be directly indicated; and if all the cells of the first access network device do not use the connected-mode cell DRX/DTX mode, correspondingly, in the configuration information, that the first access network device does not use the connected-mode cell DRX/DTX mode may also be directly indicated.

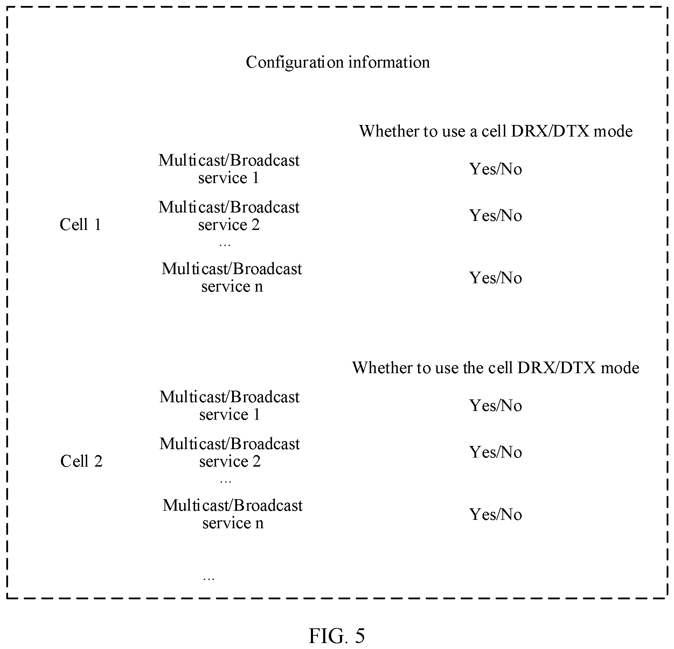

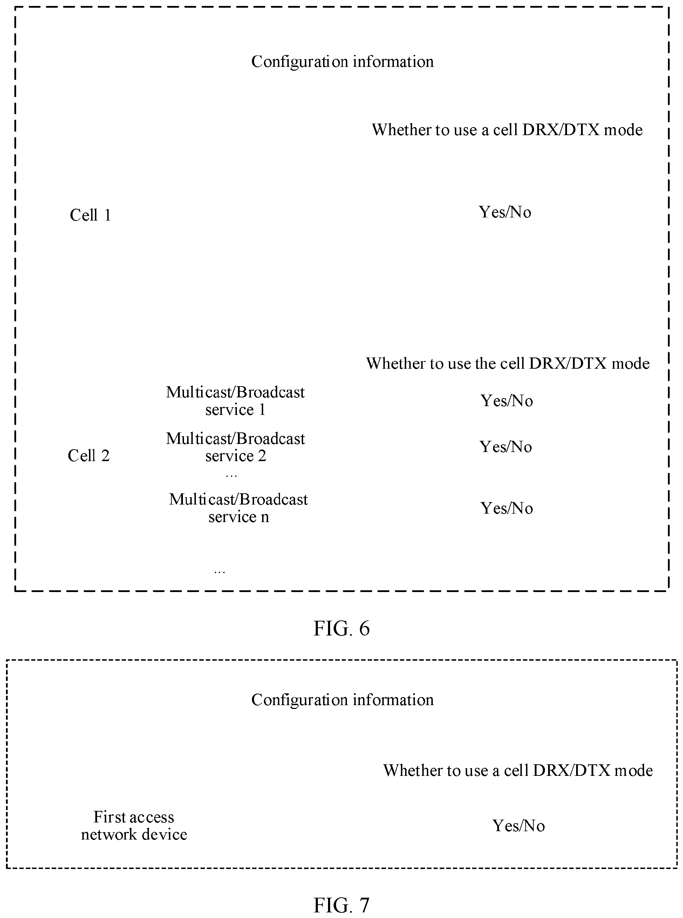

Refer to FIG. 5. In the configuration information, for each multicast/broadcast service supported by each cell, whether the multicast/broadcast service uses the cell DRX/DTX mode may be separately indicated. Refer to FIG. 6. Certainly, in some special cases, all multicast/broadcast services supported by a cell (for example, a cell 1) may use the cell DRX/DTX mode, or may not use the cell DRX/DTX mode. In this case, whether the cell DRX/DTX mode is used may not need to be separately indicated for each multicast/broadcast service supported by the cell, but that the cell uses/does not use the cell DRX/DTX mode is directly indicated. Refer to FIG. 7. If all the cells of the first access network device use/do not use the cell DRX/DTX mode, that the first access network device uses/does not use the cell DRX/DTX mode may also be directly indicated.

202: The first access network device sends the configuration information to a second access network device.

The first access network device sends the configuration information of the first access network device to the second access network device. After receiving the configuration information, the second access network device may indicate, with reference to the configuration information, a terminal device to perform cell reselection or cell handover, so that the terminal device can camp with high probability on a cell supporting a multicast/broadcast service using the cell DRX/DTX mode, thereby facilitating energy saving.

Certainly, the second access network device may alternatively send configuration information of the second access network device to the first access network device, and the first access network device may alternatively indicate, based on the configuration information of the second access network device, a terminal device to perform cell reselection or cell handover.

For example, the first access network device and the second access network device may transfer configuration information to each other by using an Xn interface setup and modification procedure. First, the first access network device sends an Xn interface setup request message (XN SETUP REQUEST message) to the second access network device (which may be more than one), to request to establish an Xn interface, where the message carries the configuration information of the first access network device. The second access network device sends, in response to the Xn interface setup request message, an XN SETUP RESPONSE message to the first access network device, to carry the configuration information of the second access network device while completing interface setup.

After the Xn interface is set up, if the configuration information of the first access network device changes, a configuration change may be notified by sending an NG-RAN NODE CONFIGURATION UPDATE message to the second access network device (which may be more than one). The message may include updated configuration information. After receiving the message, the second access network device may reply with an NG-RAN NODE CONFIGURATION UPDATE ACKNOWLEDGE message to the first access network device, to confirm that the configuration information is successfully updated.

The configuration information transfer method in this application is described above, and devices in this application are described below.

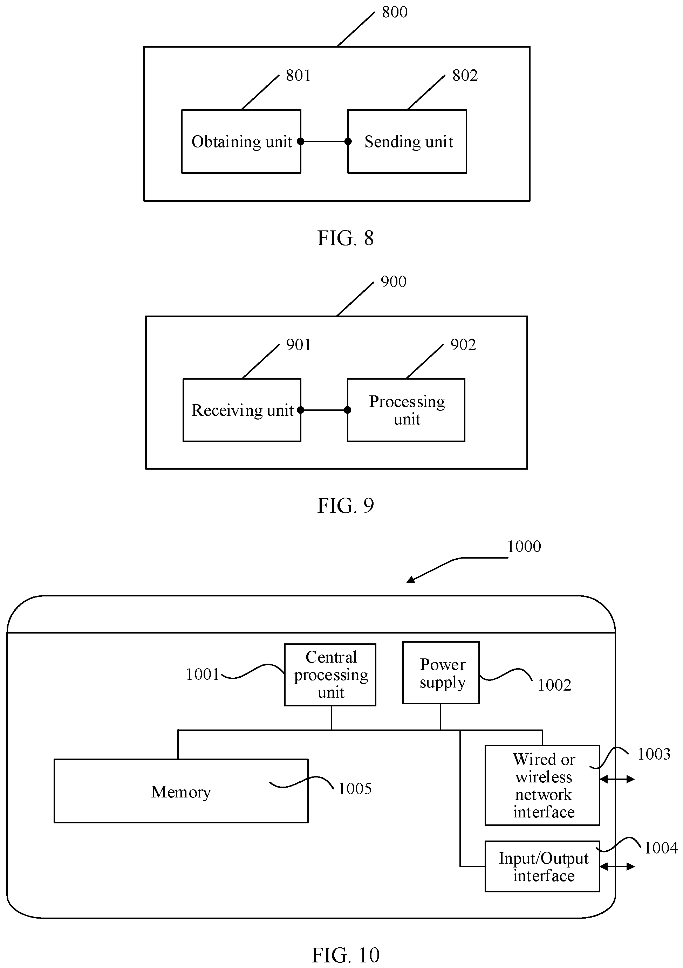

Refer to FIG. 8. A first access network device 800 in this application includes an obtaining unit 801 and a sending unit 802. The obtaining unit 801 and the sending unit 802 may be implemented by using software or hardware.

The obtaining unit 801 is configured to obtain configuration information, where the configuration information includes first service support information and second service support information of each of a plurality of cells of the first access network device. The first service support information indicates whether the cell uses a connected-mode cell DRX/DTX mode, and the second service support information indicates whether a multicast/broadcast service supported by the cell uses a cell DRX/DTX mode.

The sending unit 802 is configured to send the configuration information to a second access network device.

In a possible implementation, the configuration information is used by the second access network device to indicate a terminal to perform cell reselection.

In a possible implementation, the configuration information is used by the second access network device to indicate a terminal to perform cell handover.

In a possible implementation, in the configuration information, the multicast/broadcast service is identified by using a TMGI or a G-RNTI.

In a possible implementation, the first access network device and the second access network device are neighboring access network devices.

Refer to FIG. 9. A second access network device 900 in this application includes a receiving unit 901. The receiving unit 901 may be implemented by using software or hardware.

The receiving unit 901 is configured to receive configuration information from a first access network device, where the configuration information includes first service support information and second service support information of each of a plurality of cells of the first access network device.

The first service support information indicates whether the cell uses a connected-mode cell DRX/DTX mode, and the second service support information indicates whether a multicast/broadcast service supported by the cell uses a cell DRX/DTX mode.

In a possible implementation, the second access network device 900 further includes a processing unit 902.

The processing unit 902 is configured to indicate, based on the configuration information, a terminal to perform cell reselection.

In a possible implementation, the processing unit 902 is configured to indicate, based on the configuration information, a terminal to perform cell handover.

In a possible implementation, in the configuration information, the multicast/broadcast service is identified by using a TMGI or a G-RNTI.

In a possible implementation, the first access network device and the second access network device are neighboring access network devices.

FIG. 10 is a schematic diagram of a structure of a device according to this application. The device is configured to implement the method performed by the access network device or the terminal device in the foregoing embodiments. The device 1000 may include one or more central processing units (central processing units, CPUs) 1001 and a memory 1005. The memory 1005 stores one or more application programs or data.

The memory 1005 may be a volatile memory or a persistent memory. The program stored in the memory 1005 may include one or more modules, and each module may include a series of instruction operations on a server. Further, the central processing unit 1001 may be configured to: communicate with the memory 1005, and perform, on the device 1000, a series of instruction operations in the memory 1005. The device 1000 may further include one or more power supplies 1002, one or more wired or wireless network interfaces 1003, one or more input/output interfaces 1004, and/or one or more operating systems.

It may be clearly understood by a person skilled in the art that, for the purpose of convenient and brief description, for a detailed working process of the foregoing system, apparatus, and unit, refer to a corresponding process in the method embodiment. Details are not described herein again.

In several embodiments provided in this application, it should be understood that the disclosed system, apparatus, and method may be implemented in other manners. For example, the described apparatus embodiments are merely examples. For example, division into the units is merely logical function division and may be other division during actual implementation. For example, a plurality of units or components may be combined or integrated into another system, or some features may be ignored or not performed. In addition, the displayed or discussed mutual couplings or direct couplings or communication connections may be implemented through some interfaces. The indirect couplings or communication connections between the apparatuses or units may be implemented in electrical, mechanical, or other forms.

The units described as separate parts may or may not be physically separate, and parts displayed as units may or may not be physical units, that is, may be located at one position, or may be distributed on a plurality of network units. Some or all of the units may be selected according to actual needs to achieve the objectives of the solutions of the embodiments.

In addition, functional units in embodiments of this application may be integrated into one processing unit, each of the units may exist alone physically, or two or more units may be integrated into one unit. The integrated unit may be implemented in a form of hardware, or may be implemented in a form of a software functional unit.

When the integrated unit is implemented in the form of the software functional unit and sold or used as an independent product, the integrated unit may be stored in a computer-readable storage medium. Based on such an understanding, the technical solutions of this application essentially, or the part contributing to the related art, or all or a part of the technical solutions may be implemented in a form of a software product. The computer software product is stored in a storage medium, and includes several instructions for instructing a computer device (which may be a personal computer, a server, a network device, or the like) to perform all or some of the operations of the methods described in the embodiments of this application. The foregoing storage medium includes any medium that can store program code, such as a USB flash drive, a removable hard disk, a read-only memory (ROM, read-only memory), a random access memory (RAM, random access memory), a magnetic disk, or an optical disc.

## Claims

1. A configuration information transfer method, comprising:
obtaining, by a first access network device, configuration information, wherein the configuration information comprises first service support information and second service support information of each of a plurality of cells of the first access network device, the first service support information indicates whether the cell uses a connected-mode cell DRX/DTX mode, and the second service support information indicates whether a multicast/broadcast service supported by the cell uses a cell DRX/DTX mode; and
sending, by the first access network device, the configuration information to a second access network device.

2. The method according to claim 1, wherein the configuration information is used by the second access network device to indicate a terminal to perform cell reselection.

3. The method according to claim 1, wherein the configuration information is used by the second access network device to indicate a terminal to perform cell handover.

4. The method according to any one of claims 1 to 3, wherein in the configuration information, the multicast/broadcast service is identified by using a TMGI or a G-RNTI.

5. The method according to claim 4, wherein the first access network device and the second access network device are neighboring access network devices.

6. A configuration information transfer method, comprising:
receiving, by a second access network device, configuration information from a first access network device, wherein the configuration information comprises first service support information and second service support information of each of a plurality of cells of the first access network device; and
the first service support information indicates whether the cell uses a connected-mode cell DRX/DTX mode, and the second service support information indicates whether a multicast/broadcast service supported by the cell uses a cell DRX/DTX mode.

7. The method according to claim 6, wherein the method further comprises:
indicating, by the second access network device based on the configuration information, a terminal to perform cell reselection.

8. The method according to claim 6, wherein the method further comprises:
indicating, by the second access network device based on the configuration information, a terminal to perform cell handover.

9. The method according to any one of claims 6 to 8, wherein in the configuration information, the multicast/broadcast service is identified by using a TMGI or a G-RNTI.

10. The method according to claim 9, wherein the first access network device and the second access network device are neighboring access network devices.

11. An access network device, comprising a processor and a memory, wherein the processor is coupled to the memory, the memory is configured to store instructions, and when the instructions are executed by the processor, the access network device is enabled to perform the method according to any one of claims 1 to 10.

12. A computer-readable storage medium, storing instructions, wherein when a computer executes the instructions, the computer performs the method according to any one of claims 1 to 10.
